# EUROPÄISCHE PATENTSCHRIFT

(11) **EP 3 388 709 B1**
(45) Veröffentlichungstag und Bekanntmachung des Hinweises auf die Patenterteilung: **06.01.2021**
(21) Anmeldenummer: 17166403.0
(22) Anmeldetag: 13.04.2017
(51) Int. Cl.: F16F 15/03, F16F 7/10

(54) **SCHWINGUNGSDÄMPFERANORDNUNG**
VIBRATION ABSORBING SYSTEM
SYSTÈME D'AMORTISSEMENT DE VIBRATIONS

(43) Veröffentlichungstag der Anmeldung: 17.10.2018
(73) Patentinhaber: Wölfel Engineering GmbH & Co. KG., 97204 Höchberg (DE)
(72) Erfinder: Dr. Katz, Sebastian, 97082 Würzburg (DE); Dr.Engelhardt, Jürgen, 97249 Eisingen (DE)
(74) Vertreter: Keil & Schaafhausen Patentanwälte PartGmbB

(56) Entgegenhaltungen:
- EP-A1- 2 696 072
- WO-A1-2016/023628
- WO-A1-2017/036581
- CN-A- 1 210 806
- DE-A1-102013 201 305
- US-A1- 2014 103 942
- US-A1- 2015 251 878

## Beschreibung

Die vorliegende Erfindung betrifft eine Schwingungsdämpferanordnung mit einer Dämpfungseinrichtung, die eine Magnetfelderzeugungseinrichtung und eine elektrische Leiteranordnung aufweist, die relativ zueinander bewegbar sind, wobei die Magnetfelderzeugungseinrichtung an der elektrischen Leiteranordnung geführt ist.

Hohe, schlanke Bauwerke, d.h. Bauwerke, bei denen das Verhältnis zwischen Höhe und kleinster Breite mindestens 5 beträgt, neigen zu Schwingungen. Derartige Schwingungen können beispielsweise durch Wind angeregt werden. Das Problem der Schwingungen stellt sich insbesondere bei Windenergieanlagen. Bei Windenergieanlagen, die im Meer aufgestellt sind, wirken zusätzlich Wellenkräfte. Dabei verbiegt sich der Turm der Windenergieanlage, was auf Dauer zu kritischen Zuständen führen kann. Man verwendet daher Schwingungstilger, die zur Verminderung der Schwingungen des Turms führen sollen. Ein derartiger Schwingungstilger ist mit einem Schwingungsdämpfer versehen.

Eine Schwigungsdämpferanordnung mit den Merkmalen des Oberbegriffs des Anspruchs 1 ist aus WO 2016/023628 A1 bekannt. Dieses Dokument zeigt eine Schwingungsdämpferanordnung mit einer Dämpfungseinrichtung, die eine Magnetfelderzeugungseinrichtung und eine elektrische Leiteranordnung aufweist, die relativ zueinander bewegbar sind, wobei die Magnetfelderzeugungseinrichtung an der elektrischen Leiteranordnung geführt ist.

EP 2 696 072 A1 zeigt ebenfalls eine Schwingungstilgeranordnung mit einer Dämpfungseinrichtung, die als Wirbelstromdämpfer ausgebildet ist. Hierzu weist die Dämpfungseinrichtung eine Magnetbaugruppe als Magnetfelderzeugungseinrichtung und eine elektrische Leiteranordnung auf, die relativ zueinander bewegbar sind, wobei die Magnetfelderzeugungseinrichtung an der elektrischen Leiteranordnung geführt ist.

WO 2017/036581 A1 zeigt eine Schwingungsdämpferanordnung mit einem Schwungrad, das mit einer Rotationsmasse bestückt ist. Das Schwungrad wird durch eine Laufrolle angetrieben, die auf einer Laufschiene abrollt. Das Schwungrad kann durch eine Feststellbremse gebremst werden.

Der Erfindung liegt die Aufgabe zugrunde, über einen langen Zeitraum ein definiertes Dämpfungsverhalten zu erzielen.

Diese Aufgabe wird durch eine Schwingungsdämpferanordnung mit den Merkmalen des Anspruchs 1 gelöst.

Die elektrische Leiteranordnung übernimmt damit mehrere Aufgaben. Sie bildet ein Strukturbauteil, das zur Erzeugung von Wirbelströmen dient, wenn die Magnetfelderzeugungseinrichtung entlang der elektrischen Leiteranordnung geführt wird. Durch die Wirbelströme entsteht eine Kraft in der elektrischen Leiteranordnung, die mittels der elektrischen Leiteranordnung in eine angrenzende Struktur geleitet wird. Die elektrische Leiteranordnung dient darüber hinaus der Führung der Magnetfelderzeugungseinrichtung, so dass die Magnetfelderzeugungseinrichtung immer in einer vorbestimmten Beziehung zu der elektrischen Leiteranordnung geführt wird. Die Schwingungsdämpferanordnung findet eine bevorzugte Verwendung als dämpfende Einrichtung einer Schwingungstilgeranordnung, z.B. eines Pendeltilgers für hohe, schlanke Bauwerke, wie Windenergieanlagen. In diesem Fall kann die Schiene die Reaktionskräfte in das Fundament einer Windenergieanlage ableiten. Derartige Schwingungsdämpferanordnungen mit einem Wirbelstrom basierten Dämpfer sind reibungs- und damit verschleißarm. Aufgrund ihrer an sich einfachen Bauweise zeigen sie kaum Alterungserscheinungen und sind mithin für Anwendungen mit langer Einsatzdauer prädestiniert. Dabei kann es jedoch in bestimmten Anwendungen von Interesse sein, neben der Dämpfungsfunktion der Schwingungsdämpferanordnung zusätzlich eine Brems- und Anhalte- und/oder Blockierfunktion zu integrieren. Ebenso kann eine Ausricht- und/oder Zentrierfunktion von Interesse sein. Hierzu dient eben die steuerbare Brems-/Blockiereinrichtung. Wenn sie in vorteilhafter Weise mit der elektrischen Leiteranordnung zusammenwirkt, integriert sie dabei die steuerbare Brems-/Blockiereinrichtung in bereits vorhandene Strukturen des Schwingungstilgers. Die steuerbare Brems-/Blockiereinrichtung kann massenoptimiert ausgeführt werden. Zusätzliche Anbindungspunkte der steuerbaren Brems-/Blockiereinrichtung an externe Strukturen, wie z.B. eine Windkraftanlage, können entfallen. Die Anschlussmaße der Schwingungsdämpferanordnung können unverändert bleiben. Aufgrund der gering gehaltenen Anzahl der benötigten Bauteile und deren verschleißarme Ausführung lässt sich also über einen langen Zeitraum ein definiertes Dämpfungsverhalten erzielen. Die steuerbare Brems-/Blockiereinrichtung kann in der Lage sein, die Schwingungsdämpferanordnung zu blockieren. In diesem Fall bremst die steuerbare Brems-/Blockiereinrichtung die Bewegung der Magnetfelderzeugungseinrichtung gegenüber der elektrischen Leiteranordnung solange, bis diese relativ zueinander stehen. Jede weitere Bewegung dieser Bauteile relativ zueinander wird durch die Blockierung unterbunden. Die Blockierung der Brems-/Blockiereinrichtung kann an einer definierten Position relativ zur elektrischen Leiteranordnung erfolgen. Sie kann beispielsweise dann erfolgen, wenn sich die Schwingungsdämpferanordnung an einem axialen Ende oder einer axialen Mittellage der elektrischen Leiteranordnung befindet. Die Schwingungsdämpferanordnung kann in diesen Positionen gestoppt und arretiert werden. Die Arretierung dient dazu, dass gefahrlos an der Schwingungsdämpferanordnung gearbeitet werden kann. Ebenso kann die steuerbare Brems-/Blockiereinrichtung vorteilhaft als Reibungsbremse ausgeführt werden. Steuerbar ist die Brems-/Blockiereinrichtung insoweit als ihre Funktion manuell zum passiven Betrieb der Dämpfungseinrichtung zuschaltbar ist; die steuerbare Brems-/Blockiereinrichtung ist also vorteilhaft als aktive steuerbare Brems-/Blockiereinrichtung ausgeführt. Die erste steuerbare Brems-/Blockiereinrichtung weist mindestens ein erstes Betätigungselement aufweist, das mittels eines ersten Hebelarms mit mindestens einem ersten Bremselement zusammenwirkt. Das erste Betätigungselement dient der Betätigung bzw. Auslösung der ersten steuerbare Brems-/Blockiereinrichtung. Die Auslösung der ersten steuerbare Brems-/Blockiereinrichtung bewirkt, dass das mindestens eine erste Bremselement mit der elektrischen Leiteranordnung in eine Anlage gebracht wird. Diese Anlage erzeugt einen Reibungswiderstand zwischen der Magnetfelderzeugungseinrichtung und der elektrischen Leiteranordnung. Hierdurch wird eine Bewegbarkeit von diesen Bauteilen gegeneinander gehemmt. Die erste steuerbare Brems-/Blockiereinrichtung fungiert als aktive Reibungsbremse. Es ist weiterhin ein erster Hebelarm zwischen dem ersten Betätigungselement und dem ersten Bremselement vorgesehen. Hierdurch können die an dem ersten Betätigungselement angebrachten Kräfte entsprechend den gewählten Hebelverhältnissen verstärkt werden. Eine kleine Kraft, mit der das erste Betätigungselement betätigt wird, kann also zu einer entsprechend höheren Bremskraft verstärkt werden. Die elektrische Leiteranordnung ist als eine Schiene mit einer Längserstreckung ausgebildet ist, wobei das erste Bremselement mittels des ersten Hebelarms in eine Anlage mit der Schiene bringbar ist. Die Schiene stellt eine besonders einfache Ausführung der elektrischen Leiteranordnung dar: zum einen kann sie ohne weiteres zur Führung der Magnetfelderzeugungseinrichtung verwendet werden. Zum anderen kann die Schiene entlang ihrer Längserstreckung die größte Steifigkeit aufweisen, so dass sie zur Aufnahme von Kräften in diese Richtung in der Lage und besonders geeignet ist. Dabei übernimmt dann die Schiene auch zugleich die Funktion der elektrischen Leiteranordnung - zusätzliche Bauteile für die Schwingungsdämpferanordnung sind nicht von Nöten. Dieser Vorteil stellt sich ebenso dadurch ein, dass das erste Bremselement direkt an der Schiene zur Anlage gebracht werden kann. Die Schwingungsdämpferanordnung kann kompakt ausgeführt werden.

Dabei ist bevorzugt, dass die Schwingungsdämpferanordnung mindestens eine zweite steuerbare Brems-/Blockiereinrichtung aufweist, die auf einer der ersten steuerbare Brems-/Blockiereinrichtung gegenüberliegenden Seite der elektrischen Leiteranordnung angeordnet ist. Die zweite steuerbare Brems-/Blockiereinrichtung bezweckt eine redundante Auslegung der ersten steuerbaren Brems-/Blockiereinrichtung. Selbst in dem Fall, dass die erste steuerbare Brems-/Blockiereinrichtung fehlerhaft oder gar nicht arbeitet, kann ihre Funktion durch die zweite steuerbare Brems-/Blockiereinrichtung übernommen werden. Die Anordnung der zweiten steuerbare Brems-/Blockiereinrichtung auf der der ersten steuerbare Brems-/Blockiereinrichtung gegenüberliegenden Seite der elektrischen Leiteranordnung ermöglicht eine möglichst kompakte Bauweise der Schwingungsdämpferanordnung. Darüber hinaus kann durch die räumliche Trennung auch vermieden werden, dass die u.U. fehlerhaft oder gar nicht arbeitende erste steuerbare Brems-/Blockiereinrichtung die Funktion der zweiten steuerbaren Brems-/Blockiereinrichtung nachteilig beeinflusst.

Es ist bevorzugt, dass die zweite steuerbare Brems-/Blockiereinrichtung mindestens ein erstes Betätigungselement aufweist, das mittels eines ersten Hebelarms mit mindestens einem ersten Bremselement zusammenwirkt. Das erste Betätigungselement dient der Betätigung bzw. Auslösung der zweiten steuerbaren Brems-/Blockiereinrichtung. Die Auslösung der zweiten steuerbaren Brems-/Blockiereinrichtung bewirkt, dass das mindestens eine erste Bremselement mit der elektrischen Leiteranordnung in eine Anlage gebracht wird. Diese Anlage erzeugt einen Reibungswiderstand zwischen der Magnetfelderzeugungseinrichtung und der elektrischen Leiteranordnung. Hierdurch wird eine Bewegbarkeit von diesen Bauteilen gegeneinander gehemmt. Die zweite steuerbare Brems-/Blockiereinrichtung fungiert als aktive Reibungsbremse.

Es ist auch bevorzugt, dass die erste steuerbare Brems-/Blockiereinrichtung und/oder die zweite steuerbare Brems-/Blockiereinrichtung mindestens ein zweites Bremselement aufweist, das auf einer dem ersten Bremselement transversal zur Längserstreckung gegenüberliegenden Seite der Schiene mit dieser in Anlage bringbar ist. Zum einen wird hierdurch die jeweils erste steuerbare Brems-/Blockiereinrichtung und/oder die zweite steuerbare Brems-/Blockiereinrichtung in sich redundant ausgeführt. Selbst in dem Fall, dass das erste Bremselement fehlerhaft oder gar nicht funktionieren sollte, steht das zweite Bremselement zur Verfügung, um dessen Funktion mit zu übernehmen. Zum anderen wird sichergestellt, dass das erste Bremselement und das zweite Bremselement räumlich voneinander getrennt sind. Sie können sich mithin nicht gegenseitig in ihrer Funktion behindern oder beeinflussen.

Weiter ist bevorzugt, dass die Schiene mindestens einen transversal zur Längserstreckung verlaufenden ersten Flansch aufweist, mit dem das erste Bremselement und/oder das zweite Bremselement in Anlage bringbar ist. Der mindestens eine erste Flansch trägt zur Versteifung der Schiene bei. Die Steifigkeit der Schiene entlang ihrer Längserstreckung wird erhöht. Die Schiene ist in dieser Richtung besonders zur Aufnahme von Kräften geeignet. Weiterhin kann der erste Flansch auch der sicheren Führung der Magnetfelderzeugungseinrichtung an der Schiene dienen. Das erste Bremselement ist nun mit diesem ersten Flansch in Anlage bringbar. Es kann dabei beispielsweise in einer Überdeckung mit dem ersten Flansch angeordnet sein; ihn untergreifen. Hierdurch lässt sich zunächst eine weiter Bauraum sparende Konstruktion der Schwingungsdämpferanordnung erreichen - das erste Bremselement kann gleichsam in einer Ausnehmung der Schiene (gebildet durch den Freiraum unterhalb des ersten Flansches) angeordnet sein. Auch kann das erste Bremselement derart mit dem ersten Flansch und damit der Schiene verspannt werden. Es lässt sich eine Blockierung der Schwingungsdämpferanordnung erreichen. Diese Verspannung kann zusätzlich zur durch das erste Bremselement erzeugten Reibung eine Bremswirkung hervorrufen. Die Funktion und Rolle des ersten Bremselements kann ebenso alternativ oder zusätzlich von dem zweiten Bremselement übernommen werden.

Auch ist bevorzugt, dass die Schiene mindestens zwei paarweise transversal zur Längserstreckung verlaufende Flansche aufweist, zwischen denen das erste Bremselement und/oder das zweite Bremselement angeordnet ist. Die Schiene kann damit ein I-Profil, das auch als Doppel-T-Profil oder H-Profil bezeichnet werden kann, aufweisen. Dieses Profil weist im Querschnitt einen Steg auf, an dessen transversal zur Längserstreckung liegenden Enden jeweils die quer zum Steg verlaufenden Flansche angeordnet sind. Es sind insbesondere diese Abschnitte, die zur Versteifung der Schiene beitragen. Weiterhin ist es nunmehr möglich, das erste Bremselement und/oder das zweite Bremselement in einer Ausnehmung zwischen diesen Flanschen bausparend anzuordnen. Die paarweise transversal verlaufenden Flansche können auf transversal zur Längserstreckung gegenüberliegenden Seiten der Schiene angeordnet sein. In diesem Fall kann das erste Bremselement gegen den ersten Flansch und das zweite Bremselement gegen den zweiten Flansch verspannt werden. Bei Betätigung der steuerbare Brems-/Blockiereinrichtung werden dann das erste Bremselement und das zweite Bremselement auseinander gedrückt und gegen die Flansche, das ist die Innenseiten des I-Profils der Schiene, verspannt.

Es ist bevorzugt, dass das erste Betätigungselement mittels eines ersten Zugelements betätigbar ist und wobei mindestens der erste Hebelarm mittels einer ersten Vorspannungseinrichtung unter einer Vorspannung gehalten ist. Das erste Zugelement kann als Bowdenzug ausgebildet sein. Dieser kann beispielsweise über eine Handseilwinde betätigt werden. Bei Betätigung der steuerbaren Brems-/Blockiereinrichtung werden dann das erste Bremselement und/oder das zweite Bremselement in Anlage mit der Schiene gebracht. Sobald die Bremswirkung nicht mehr erwünscht oder benötigt ist, müssen das erste Bremselement und/oder das zweite Bremselement wieder in ihre Ausgangsposition überführt werden. Hierzu dient die Vorspannungseinrichtung, die den ersten Hebelarm unter einer Vorspannung hält. Sobald also der Zug an dem Zugelement eingestellt wird, überwindet die Vorspannung die Zugkraft und das erste Bremselement und/oder das zweite Bremselement werden mittels des ersten Hebelarms in ihre Ausgangsposition zurück überführt.

Alternativ oder zusätzlich ist bevorzugt, dass mindestens das erste Betätigungselement mittels eines ersten Aktuators gesteuert ist. Der Aktuator kann beispielsweise durch einen Elektromotor gesteuert werden.

Vorzugsweise ist ein Abstandssensor vorgesehen, der einen Abstand zwischen der Magnetfelderzeugungseinrichtung und der elektrischen Leiteranordnung überwacht. Ein derartiger Abstandssensor kann zwei Aufgaben übernehmen. Ein Abstand zwischen der Magnetfelderzeugungseinrichtung und der elektrischen Leiteranordnung, also ein Luftspalt zwischen der Magnetfelderzeugungseinrichtung und der elektrischen Leiteranordnung, ist ein wesentlicher Parameter für die Erzeugung der Wirbelströme und damit für die Erzeugung von Dämpfungskräften. Der Abstandssensor kann eine Information darüber bereitstellen, ob die Bedingungen für die jeweils erwünschten Dämpfungskräfte vorhanden sind oder nicht. Darüber hinaus kann der Abstandssensor auch verwendet werden, um einen Verschleiß anzuzeigen, so dass man rechtzeitig eine Wartung vornehmen kann, um einer Kollision zwischen der Magnetfelderzeugungseinrichtung und der elektrischen Leiteranordnung vorzubeugen.

Vorzugsweise weist die Magnetfelderzeugungseinrichtung eine Rollenanordnung mit mehreren Rollen auf, die an der elektrischen Leiteranordnung anliegen. Mit Hilfe der Rollen wird die Magnetfelderzeugungseinrichtung entlang der elektrischen Leiteranordnung geführt. Die Rollen sorgen dabei für einen relativ geringen mechanischen Widerstand. Die Rollen können aber auch verwendet werden, um über den gesamten Bewegungsweg der Magnetfelderzeugungseinrichtung an der elektrischen Leiteranordnung entlang für einen konstanten Luftspalt zwischen der Magnetfelderzeugungseinrichtung und der elektrischen Leiteranordnung zu sorgen.

Hierbei ist bevorzugt, dass jeweils zwei Rollen paarweise an gegenüberliegenden Seiten der elektrischen Leiteranordnung anliegen. Die elektrische Leiteranordnung wird dadurch symmetrisch von beiden Seiten her belastet. Man kann damit auch erreichen, dass man auf beiden Seiten der elektrischen Leiteranordnung gleiche oder zumindest gleichartige magnetische Verhältnisse erzielt, insbesondere dann, wenn die Magnetfelderzeugungseinrichtung auf beiden Seiten der elektrischen Leiteranordnung Magnete aufweist.

Hierbei ist bevorzugt, dass mindestens eine Rolle unter einer Vorspannung an der elektrischen Leiteranordnung anliegt. Dadurch lässt sich erreichen, dass die elektrische Leiteranordnung sozusagen immer an der Magnetfelderzeugungseinrichtung eingespannt ist. Es ist allerdings von Vorteil, wenn bei paarweise gegenüberliegenden Rollen jede Rolle des Paares unter einer Vorspannung an der elektrischen Leiteranordnung anliegt, so dass die auf gegenüberliegende Seiten der elektrischen Leiteranordnung wirkenden Kräfte gleich groß sind. Vor allem wird die elektrische Leiteranordnung immer in einer mittleren Position in der Magnetfelderzeugungseinrichtung gehalten. Die Anlage der Rollen unter einer Vorspannung an der elektrischen Leiteranordnung kann beispielsweise dadurch erreicht werden, dass die mindestens eine Rolle eine Vorspanneinrichtung aufweist.

Vorzugsweise weist die Magnetfelderzeugungseinrichtung mindestens zwei in Längserstreckung der Schiene nebeneinander mit einem vorbestimmten Abstand angeordnete Magnete und auf der von der Schiene abgewandten Seite der Magnete eine magnetisierbare Rückschlussplatte auf. Die magnetische Rückschlussplatte überbrückt den Abstand und bildet einen Teil des Magnetkreises mit einem geringen magnetischen Widerstand. Durch die magnetisierbare Rückschlussplatte ist es möglich, die Wirkung des Magnetfelds in der Schiene und damit in der elektrischen Leiteranordnung so groß wie möglich zu halten. Damit lässt sich möglichst viel Schwingungsenergie über die durch die Bewegung der Magnetfelderzeugungseinrichtung entlang der Schiene erzeugten Wirbelströme in Wärme umwandeln.

Vorzugsweise weist mindestens eine Rolle einen Verschleißsensor auf. Auch wenn die Rolle reibungsarm und verschleißarm mit der Schiene zusammenwirkt, ist ein gewisser Verschleiß nicht zu vermeiden. Dieser Verschleiß führt dann zu einer allmählichen Verringerung des Durchmessers der Rolle. Der Verschleißsensor kann ein Signal erzeugen, wenn beispielsweise ein vorbestimmter Durchmesser unterschritten worden ist. In diesem Fall kann dann die Rolle bei der nächsten Wartung ausgetauscht werden. Die Rolle bildet dann sozusagen ein Verschleißteil.

Auch kann bevorzugt sein, dass die Schiene quer zu ihrer Längserstreckung eine Aussteifung aufweist. Damit wird das Risiko klein gehalten, dass sich die Schiene verbiegt. Dieses Risiko besteht beispielsweise bei Vordeformationen und/oder Imperfektionen oder dann, wenn gleichzeitig mit der Bewegung der Magnetfelderzeugungseinrichtung entlang der Schiene Kräfte quer zur Längserstreckung der Schiene auf die Schiene wirken. Durch die Aussteifung erhält die Schiene eine höhere Steifigkeit.

Vorzugsweise weist die Schiene zumindest an ihrer Oberfläche eloxiertes Aluminium auf. Die Schiene weist also eine Eloxalschicht auf und ist dadurch in der Lage, die Wärmeabgabe zu verbessern. Durch den hohen thermischen Emissionswert ergibt sich ein thermisch günstiges Verhalten. Darüber hinaus wird mit einer derartigen Eloxalschicht ein guter Korrosionsschutz erreicht. Eloxiertes Aluminium hat eine harte und damit verschleißarme Oberfläche, so dass auch bei einer längeren Betriebsdauer das Risiko eines Verschleißes der Schiene klein ist.

Hierbei ist bevorzugt, dass die Schiene aus Aluminium oder einer Aluminiumlegierung oder einer Kombination von Aluminium mit einem anderen Metall gebildet ist. Beispielsweise kann Aluminium gemeinsam mit Kupfer verwendet werden. Damit ergeben sich gute elektrische Eigenschaften bei einer gleichzeitig hohen mechanischen Stabilität. Die Kombination von mehreren Metallen kann beispielsweise dadurch gebildet sein, dass man die Aluminiumschiene mit einem Kern aus Kupfer versieht, um die erreichbaren Dämpferkräfte zu erhöhen.

Auch ist von Vorteil, wenn die Schiene für jede Rolle eine Lauffläche bildet, die breiter ist als jeweils eine axiale Länge der Rolle. Damit liegt die Rolle über ihre gesamte axiale Länge an der Schiene an und die Schiene kann sich nicht in Teilbereiche der Rolle hineinarbeiten.

Hierbei ist bevorzugt, dass mindestens eine Rolle aus einem Kunststoff gebildet ist, insbesondere aus einem Kunststoff mit einer Dauergebrauchstemperaturbeständigkeit von 80° C und vorzugsweise mindestens 100° C. Bei der Verwendung einer Kunststoffrolle kann der Verschleiß der Schiene klein gehalten werden. Wenn man einen Kunststoff mit einer hohen Temperaturbeständigkeit verwendet, dann kann man eine entsprechend hohe Temperatur in der Schiene zulassen.

Hierbei ist bevorzugt, dass die magnetisierbare Rückschlussplatte auswechselbar oder in ihrer Dicke veränderbar ist. Die Dicke oder Stärke der magnetisierbaren Rückschlussplatte beeinflusst das in der Schiene wirkende Magnetfeld. Durch die magnetisierbare Rückschlussplatte lässt sich also die Wirkung der Magnetfelderzeugungseinrichtung in gewissem Umfang einstellen und damit auch die Dämpferkräfte der Schwingungsdämpferanordnung.

Vorzugsweise weist die Schiene eine Länge von mindestens 1,5 m auf. Damit ist sie geeignet für eine Schwingungstilgeranordnung einer Windenergieanlage, deren Turm eine Höhe von über 100 m aufweist.

Die Erfindung wird im Folgenden anhand von bevorzugten Ausführungsbeispielen in Verbindung mit den Zeichnungen beschrieben. Hierin zeigen:
- Fig. 1: eine perspektivische Darstellung einer Schwingungsdämpferanordnung nach einem ersten Ausführungsbeispiel;
- Fig. 2: eine perspektivische Darstellung der Schwingungsdämpferanordnung nach dem ersten Ausführungsbeispiel mit weiteren Bauteilen;
- Fig. 3: eine perspektivische Darstellung eines ersten Ausführungsbeispiels einer Rückseite einer ersten steuerbaren Brems-/Blockiereinrichtung;
- Fig. 4: eine perspektivische Darstellung des ersten Ausführungsbeispiels einer Vorderseite der ersten steuerbaren Brems-/Blockiereinrichtung;
- Fig. 5: eine perspektivische Darstellung eines zweiten Ausführungsbeispiels der ersten steuerbaren Brems-/Blockiereinrichtung und einer zweiten steuerbaren Brems-/Blockiereinrichtung;
- Fig. 6: eine perspektivische Darstellung des zweiten Ausführungsbeispiels einer Rückseite der ersten steuerbaren Brems-/Blockiereinrichtung;
- Fig. 7: eine perspektivische Darstellung des zweiten Ausführungsbeispiels einer Vorderseite der ersten steuerbaren Brems-/Blockiereinrichtung.

Eine Schwingungsdämpferanordnung 1 weist eine Magnetfelderzeugungseinrichtung 2 und eine elektrische Leiteranordnung 3 auf.

Die Schwingungsdämpferanordnung 1 verfügt über eine erste steuerbare Brems-/Blockiereinrichtung 4 und eine zweite steuerbare Brems-/Blockiereinrichtung 5. Die steuerbaren Brems-/Blockiereinrichtungen 4, 5 können zusätzlich zu einer Wirbelstrombremse wirken, die die Magnetfelderzeugungseinrichtung 2 und die elektrische Leiteranordnung 3 aufweist. Die steuerbaren Brems-/Blockiereinrichtungen 4, 5 dienen dazu, eine Relativbewegung zwischen der Magnetfelderzeugungseinrichtung 2 und der elektrischen Leiteranordnung 3 bis zum Stillstand zu verringern und diese beiden Elemente gegebenenfalls gegeneinander zu verriegeln oder zu blockieren. Dabei weist die erste steuerbare Brems-/Blockiereinrichtung 4 ein erstes Betätigungselement 6 und die zweite steuerbare Brems-/Blockiereinrichtung 5 ein zweites Betätigungselement 7 auf. Das erste Betätigungselement 6 und das zweite Betätigungselement 7 wirken mit einer Spreizeinrichtung 8 zusammen.

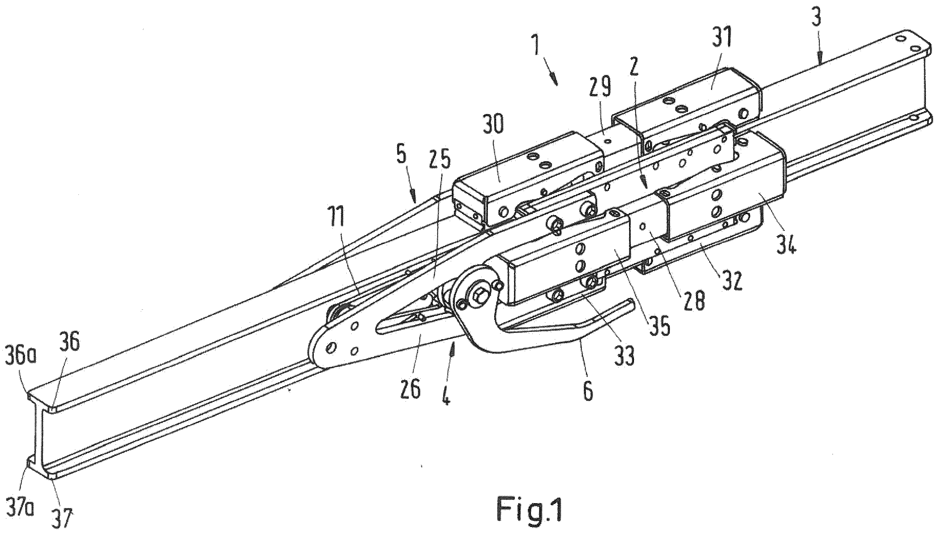

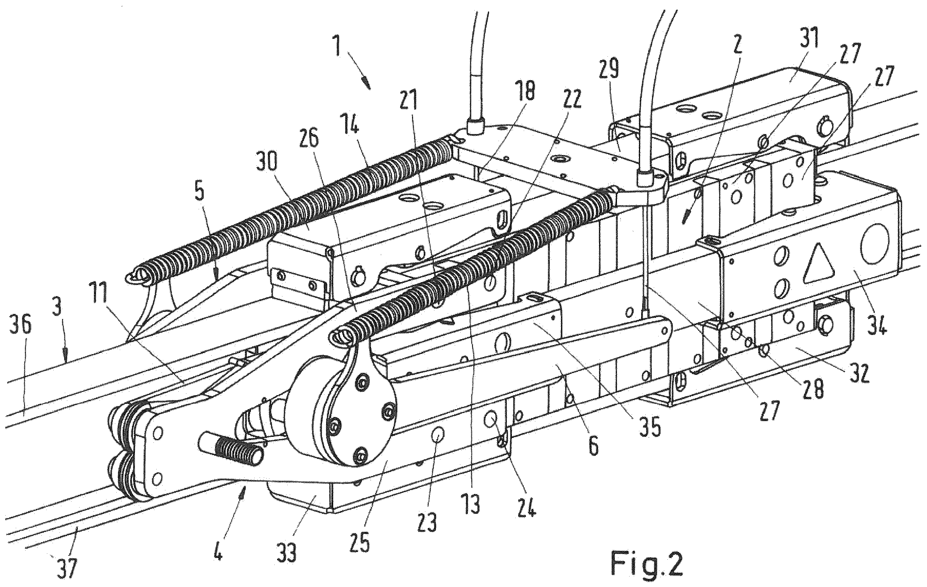

Die Spreizeinrichtung 8 dient dazu, ein erstes Bremselement 9 und ein zweites Bremselement 10 in einer Richtung transversal zur Längserstreckung der elektrischen Leiteranordnung 3 voneinander zu entfernen. Ein weiteres Spreizelement (nicht dargestellt) dient dazu, ein drittes Bremselement 9a und ein viertes Bremselement 10a in einer Richtung transversal zur Längserstreckung der elektrischen Leiteranordnung 3 voneinander zu entfernen. Das erste Bremselement 9 und das zweite Bremselement 10 sind an der ersten steuerbaren Brems-/Blockiereinrichtung 4 angeordnet. Weiter sind dann das dritte Bremselement 9a und das vierte Bremselement 10a an der zweiten steuerbaren Brems-/Blockiereinrichtung 5 vorgesehen. Diese Merkmale sind insbesondere aus den Fig. 1 und 2 ersichtlich.

Das erste Betätigungselement 6 wirkt nun mittels eines ersten Hebelarms 11 mit dem ersten Bremselement 9 zusammen. Das erste Betätigungselement 6 wirkt mittels eines zweiten Hebelarms 12 mit dem zweiten Bremselement 10 zusammen. Das zweite Betätigungselement 7 wirkt mittels eines dritten Hebelarms 11a mit dem dritten Bremselement 9a zusammen. Das zweite Betätigungselement 7 wirkt mittels eines vierten Hebelarms 12a mit dem vierten Bremselement 10a zusammen.

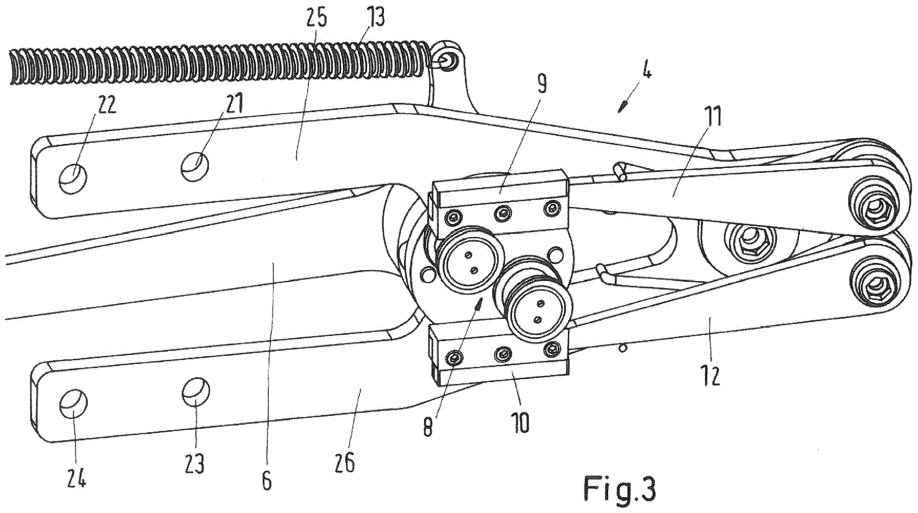

Die Funktionsweise der ersten steuerbaren Brems-/Blockiereinrichtung 4 und der zweiten steuerbaren Brems-/Blockiereinrichtung 5 ist also insoweit wie folgt. Die Betätigung des ersten Betätigungselements 6 bzw. des zweiten Betätigungselements 7 löst den Spreizmechanismus 8 aus. Dieser spreizt das erste Bremselement 9 und das zweite Bremselement 10 bzw. das dritte Bremselement 9a und das vierte Bremselement 10a auf; diese werden mittels des ersten Hebelarms 11 und des zweiten Hebelarms 12 bzw. des dritten Hebelarms 11a und des vierten Hebelarms 12a voneinander in Richtung transversal zur Längserstreckung der elektrischen Leiteranordnung 3 entfernt. Der erste Hebelarm 11, der zweite Hebelarm 12, der dritte Hebelarm 11a und der vierte Hebelarm 12a sind dabei drehsteif mit der Spreizeinrichtung 8 verbunden. Die Hebelverhältnisse des ersten Hebelarms 11, des zweiten Hebelarms 12, des dritten Hebelarms 11a und des vierten Hebelarms 12a können dabei je nach Anwendung frei gewählt werden. Hierdurch wird eine Verstärkung der auf das erste Betätigungselement 6 und das zweite Betätigungselement 7 aufgebrachten Kraft erreicht, die dann für Bremszwecke zur Verfügung steht. Die Bremswirkung wird dadurch erzielt, dass ein Bremsbelag des ersten Bremselements 9, des zweiten Bremselements 10, des dritten Bremselements 9a und des vierten Bremselements 10a zur Anlage mit der elektrischen Leiteranordnung 3 gebracht wird. Die erste steuerbare Brems-/Blockiereinrichtung 4 und die zweite steuerbare Brems-/Blockiereinrichtung 5 fungieren somit als aktive Reibungsbremse. Insbesondere Fig. 3 zeigt hier das Zusammenwirken von Betätigungselement 6, Spreizeinrichtung 8, erstem Hebelarm 11 und zweitem Hebelarm 12 sowie dem ersten Bremselement 9 und dem zweiten Bremselement 10.

Die Schwingungsdämpferanordnung 1 kann so relativ zur elektrischen Leiteranordnung 3 zum Stillstand gebracht werden. Dies kann an einer vorbestimmten definierten Position der elektrischen Leiteranordnung 3 erfolgen. Die Blockierung der Schwingungsdämpferanordnung 1 kann beispielsweise dann erfolgen, wenn diese sich an einem axialen Ende oder einer axialen Mittellage der elektrischen Leiteranordnung 3 befindet. Die Schwingungsdämpferanordnung 1 kann in diesen Positionen gestoppt und arretiert werden. Die Arretierung dient dazu, dass gefahrlos an der Schwingungsdämpferanordnung 1 gearbeitet werden kann.

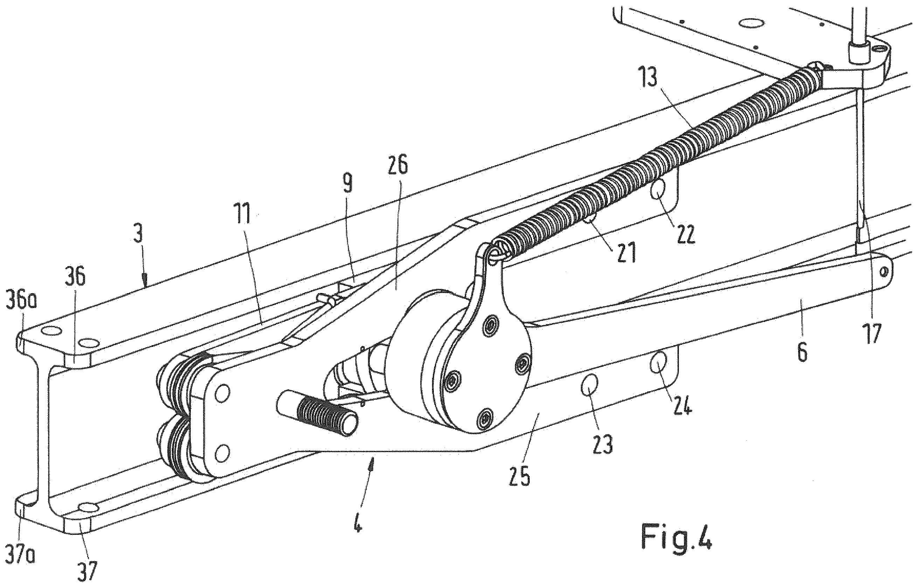

Sobald dann eine Bremswirkung nicht mehr benötigt wird, müssen das erste Bremselement 9 und das zweite Bremselement 10 (sowie ggfs. das dritte Bremselement 9a und das vierte Bremselement 10a) wieder außer Anlage mit der elektrischen Leiteranordnung 3 gebracht werden. Deren Aufspreizung vermittels der Spreizeinrichtung 8 muss rückgängig gemacht werden. Hierzu ist nun im Ausführungsbeispiel der Fig. 3, 4 eine erste Vorspannungseinrichtung 13 bzw. eine zweite Vorspannungseinrichtung 14 vorgesehen. Diese sind hier als Federn ausgebildet, die wiederum über einen Hebelarm mit der Spreizeinrichtung 8 zusammenwirken. Sobald also die auf das erste Betätigungselement 6 bzw. das zweite Betätigungselement 7 ausgeübte Kraft die Vorspannung der ersten Vorspannungseinrichtung 13 bzw. der zweiten Vorspannungseinrichtung 14 unterschreitet, werden das erste Bremselement 9 und das zweite Bremselement 10 bzw. das dritte Bremselement 9a und das vierte Bremselement 10a wieder außer Anlage mit der elektrischen Leiteranordnung 3 gebracht. Die Bremswirkung endet.

Die Bremselemente 9, 10, 9a, 10a können auch mit anderen Elementen als der elektrischen Leiteranordnung 3 zusammenwirken.

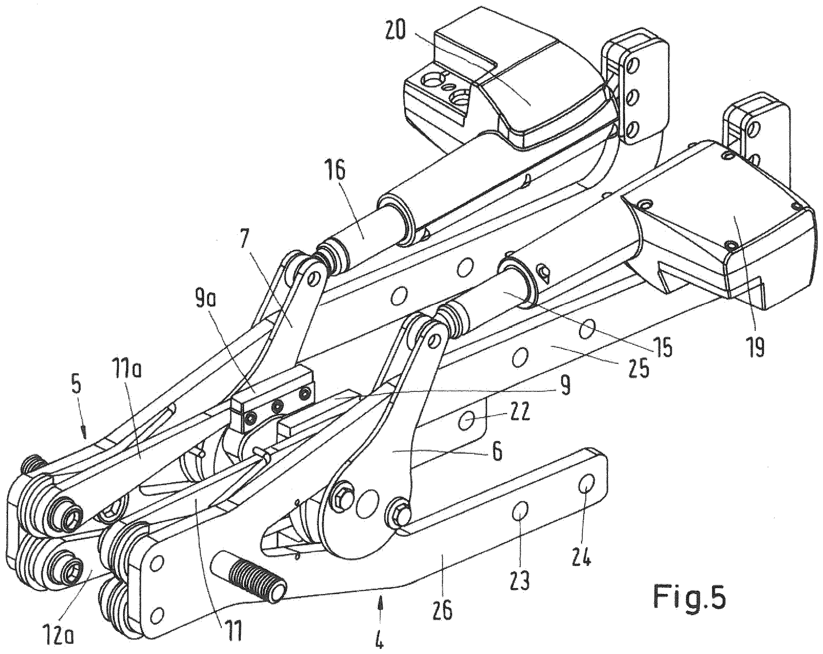

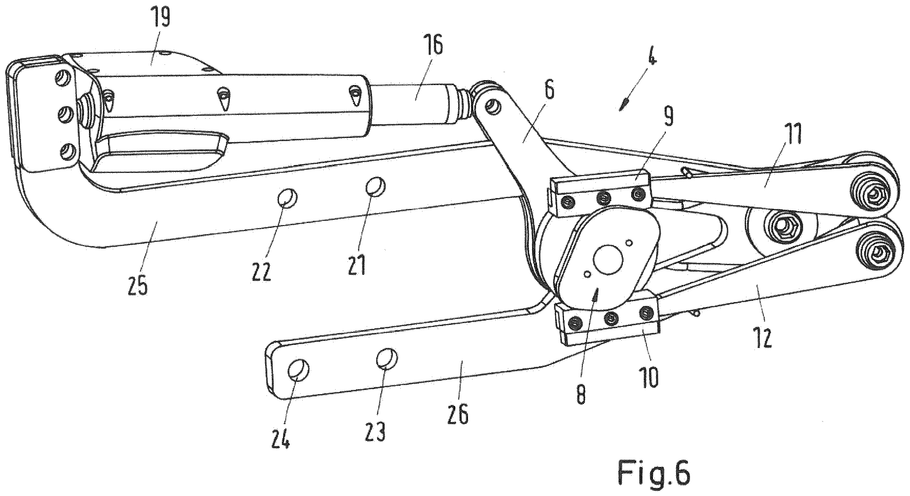

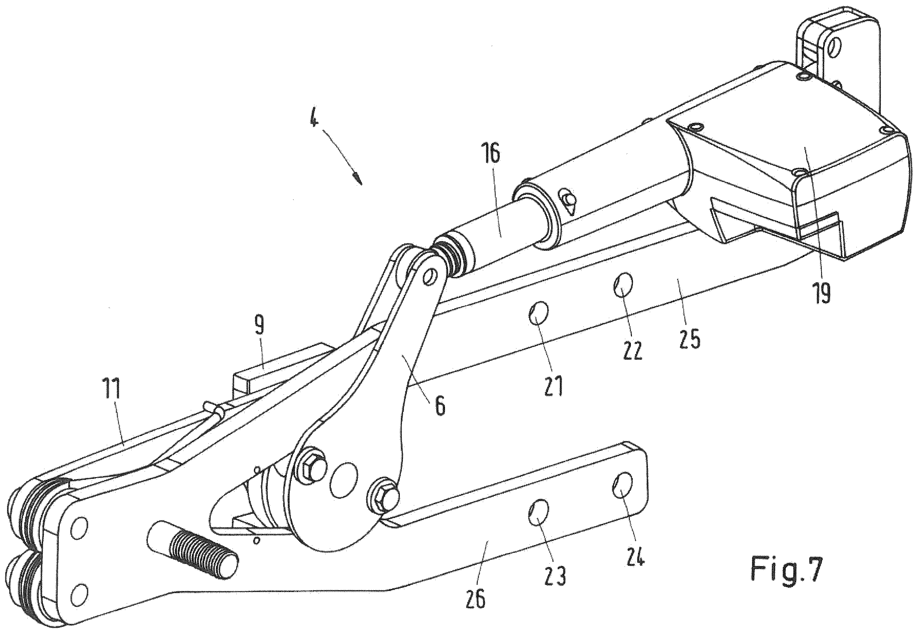

Die erste Vorspannungseinrichtung 13 bzw. die zweite Vorspannungseinrichtung 14 werden in dem zweiten Ausführungsbeispiel der Fig. 5 bis 7 durch einen ersten Aktuator 15 und einen zweiten Aktuator 16 ersetzt. Insoweit kann also auf die erste Vorspannungseinrichtung 13 und die zweite Vorspannungseinrichtung 14 hier verzichtet werden. Der erste Aktuator 15 und der zweite Aktuator 16 können durch einen ersten Elektromotor 19 und einen zweiten Elektromotor 20 angesteuert werden. Diese Funktion übernimmt im ersten Ausführungsbeispiel noch ein erstes Zugelement 17 und ein zweites Zugelement 18. Dieses erste Zugelement 17 und das zweite Zugelement 18 sind dabei in den Fig. 2 und 4 als Bowdenzüge ausgebildet. Die Betätigung der Bowdenzüge kann beispielsweise über eine Handseilwinde erfolgen. Über Federn im Bowdenzug vor der Handseilwinde kann die Vorspannkraft auch bei Toleranzen aufrechterhalten werden.

Die Funktionsweise der ersten steuerbaren Brems-/Blockiereinrichtung 4 und der zweiten steuerbaren Brems-/Blockiereinrichtung 5 ist im Ausführungsbeispiel der Fig. 5 bis 7 grundsätzlich identisch mit derjenigen der Fig. 3 und 4.

Die erste steuerbare Brems-/Blockiereinrichtung 4 und die zweite steuerbare Brems-/Blockiereinrichtung 5 können nun an der Magnetfelderzeugungseinrichtung 2 der Schwingungsdämpferanordnung 1 befestigt werden. Hierzu sind Befestigungsöffnungen 21, 22, 23, 24 vorgesehen. Diese Befestigungsöffnungen 21, 22, 23, 24 sind in einem ersten Ausleger 25 und einem zweiten Ausleger 26 der ersten steuerbaren Brems-/Blockiereinrichtung 4 bzw. der zweiten steuerbaren Brems-/Blockiereinrichtung 5 angeordnet.

Die Magnetfelderzeugungseinrichtung 2 weist selbst eine Vielzahl von Magneten (nicht sichtbar dargestellt) auf. Auch sind hier eine Vielzahl an magnetisierbaren Rückschlussplatten 27 vorgesehen. Die Vielzahl von Magneten kann jeweils auf gegenüberliegenden Seiten der elektrischen Leiteranordnung 3 angeordnet sein. Die Magnete können dabei jeweils paarweise angeordnet sein. Diese paarweise Anordnung kann so erfolgen, dass ein Nordpol eines Magneten einem Südpol des gegenüberliegenden Magneten gegenüberliegt. Bei einem benachbarten Magnetpaar ist die Orientierung der Pole dann umgekehrt. Während also bei dem zuerst erwähnten Magnetpaar beispielsweise der Nordpol auf der der elektrischen Leiteranordnung 3 zugewandten Seite der elektrischen Leiteranordnung 3 liegt, ist es bei dem benachbarten Magnetpaar der Südpol.

Zwischen diesen Paaren an Magneten ist jeweils ein vorbestimmter Abstand vorgesehen. Dieser Abstand wird durch die magnetisierbaren Rückschlussplatten 27 überbrückt. Die magnetisierbaren Rückschlussplatten 27 können beispielsweise mit Hilfe von Schrauben an der Schwingungsdämpferanordnung befestigt sein. Die magnetisierbaren Rückschlussplatten 27 sind auswechselbar. Man kann magnetisierbare Rückschlussplatten 27 mit unterschiedlichen Dicken verwenden oder deren Dicke verändern, indem man zusätzliche Platten aus Eisen oder einem anderen magnetisch leitenden Werkstoff auflegt und ggfs. festschraubt. Die magnetisierbaren Rückschlussplatten 27 bilden einen Teil des Magnetkreises. Ihre Dicke bestimmt die magnetische Leitfähigkeit dieses Abschnitts des Magnetkreises und nimmt damit Einfluss auf die Stärke des Magnetfeldes, das die elektrische Leiteranordnung 3 durchdringt. Damit kann man Einfluss auf die Höhe der Wirbelströme nehmen, die bei einer Bewegung der Magnetfelderzeugungseinrichtung 2 relativ zur elektrischen Leiteranordnung 3 in dieser induziert werden, und damit die Dämpfungskonstante der Schwingungsdämpferanordnung 1 einstellen. Durch Hinzufügen oder Wegnehmen von Magneten lässt sich der Wirbelstromdämpfer skalieren. Nach einer anderen Möglichkeit kann auch vorgesehen sein, dass man die Größe der Magnete, insbesondere ihre Erstreckung parallel zur Längserstreckung der elektrischen Leiteranordnung 3 verändert.

Die Schwingungsdämpferanordnung 1 weist weiterhin eine erste Rollenanordnung 30, eine zweite Rollenanordnung 31, eine dritte Rollenanordnung 32, eine vierte Rollenanordnung 33 und eine fünfte Rollenanordnung 34 sowie eine sechste Rollenanordnung 35 auf. Jede dieser Rollenanordnungen 30, 31, 32, 33, 34, 35 kann jeweils mehrere Rollen aufweisen, im dargestellten Ausführungsbeispiel sind es insgesamt acht Rollen. Dabei ist es vorteilhaft, wenn jeweils zwei dieser mehreren Rollen paarweise an gegenüberliegenden Seiten der elektrischen Leiteranordnung 3 anliegen. Dabei ist ersichtlich, dass die Rollen der ersten Rollenanordnung 30 und der zweiten Rollenanordnung 31 in einer Ebene der elektrischen Leiteranordnung 3 anliegen, die durch einen ersten Flansch 36 und einen dritten Flansch 36a gebildet ist. Die dritte Rollenanordnung 32 und die vierte Rollenanordnung 33 weisen dabei Rollen auf, die in einer durch einen zweiten Flansch 37 und einen vierten Flansch 37a gebildeten Ebene der elektrischen Leiteranordnung 3 anliegen. Zwischen dem ersten Flansch 36 und dem zweiten Flansch 37 ist ein Freiraum vorgesehen, in dem die Rollen der fünften Rollenanordnung 34 und der sechsten Rollenanordnung 35 an der elektrischen Leiteranordnung 3 anliegen. Es ist somit ersichtlich, dass die elektrische Leiteranordnung 3 für jede der Rollen eine Lauffläche bildet. Die Lauffläche kann breiter sein als eine axiale Länge der jeweiligen Rolle. Damit ist es dann nicht möglich, dass sich die elektrische Leiteranordnung 3 in den Umfang einer Rolle einarbeitet. Vielmehr werden sich die Rollen über die Zeit und dem damit einhergehenden Verschleiß gleichmäßig über ihre axiale Länge abnutzen, so dass sich ebenfalls der Durchmesser der Rollen verringert.

Es ist ein erstes Montageelement 28 und ein zweites Montageelement 29 vorgesehen. Diese dienen dazu, die an ihnen befestigten Rollen vorzumontieren und auszurichten, so dass diese an der Magnetfelderzeugungseinrichtung 2 befestigt werden können.

Dabei kann es vorgesehen sein, dass mindestens eine Rolle unter einer mechanischen Vorspannung an der elektrischen Leiteranordnung 3 anliegt. Die Vorspannung kann beispielsweise mittels einer Vorspanneinrichtung erzeugt werden. Diese beaufschlagt dann die jeweilige Rolle mit einer Kraft in Richtung auf die elektrische Leiteranordnung 3. Die Vorspanneinrichtung kann beispielsweise als Feder ausgebildet sein.

Die Rollen können jeweils paarweise auf einander gegenüberliegenden Seiten der elektrischen Leiteranordnung 3 angeordnet sein. Die Vorspannung, unter der die Rolle an der elektrischen Leiteranordnung 3 jeweils anliegt, sind dann vorzugsweise entgegengesetzt gleich groß, so dass die Magnetfelderzeugungseinrichtung 2 gegenüber der elektrischen Leiteranordnung 3 durch die zwischen der Magnetfelderzeugungseinrichtung 2 und der elektrischen Leiteranordnung 3 wirkenden Kräfte in einer Gleichgewichtslage gehalten wird.

Die Rollen werden vorzugsweise aus einem Kunststoff gebildet sein. Ein Kunststoff verschleißt dabei schneller als das Material der elektrischen Leiteranordnung 3. Die Rollen bilden dann jeweils Verschleißteile, die bei einer turnusgemäßen Wartung ausgetauscht werden können. Hierdurch wird eine hohe Lebensdauer der Schwingungsdämpferanordnung 1 sichergestellt.

In Abhängigkeit von der Geschwindigkeit, mit der die Magnetfelderzeugungseinrichtung 2 relativ zur elektrischen Leiteranordnung 3 bewegt wird und in Abhängigkeit der Stärke der Magnete kann eine erhebliche elektrische Leistung in der elektrischen Leiteranordnung 3 in Wärme umgewandelt werden. Dies führt zu einer entsprechenden Erhöhung der Temperatur der elektrischen Leiteranordnung 3. Aus diesem Grund ist es günstig, wenn die Rollen aus einem Kunststoff gebildet sind, der eine erhöhte Temperaturbeständigkeit aufweist. Bevorzugterweise beträgt die Dauergebrauchstemperaturbeständigkeit mindestens 80° C und besonders bevorzugterweise beträgt die Dauergebrauchstemperaturbeständigkeit des Kunststoffs mindestens 100° C. Viele Kunststoffe halten zwar Temperaturen von 80° C oder 100° C aus, werden dabei aber unzulässig weich. Der Ausdruck "Dauergebrauchstemperaturbeständigkeit" bringt zum Ausdruck, dass die Rollen auch bei den genannten Temperaturen ihre mechanischen Eigenschaften beibehalten.

Die Rollen können schließlich mit einem Verschleißsensor ausgerüstet sein. Der Verschleißsensor kann beispielsweise ein Signal erzeugen, wenn der Durchmesser einer Rolle unter einen vorbestimmten Wert absinkt.

Ebenso kann ein Abstandssensor vorgesehen sein, der einen Abstand zwischen der Magnetfelderzeugungseinrichtung 2 und der elektrischen Leiteranordnung 3 überwacht. Man kann damit feststellen, ob der Abstand zwischen der Magnetfelderzeugungseinrichtung 2 und der elektrischen Leiteranordnung 3 einen vorgegebenen Wert hat und beibehält. Der Abstandssensor kann auch dazu verwendet werden, um im Falle eines Verschleißes rechtzeitig vor einer Kollision der Magnetfelderzeugungseinrichtung 2 und der elektrischen Leiteranordnung 3 zu warnen.

Die elektrische Leiteranordnung 3 besteht schließlich aus Aluminium oder einer Aluminiumlegierung, in der beispielsweise auch Kupfer enthalten sein kann. Die elektrische Leiteranordnung 3 weist eine Oberfläche auf, an der ein eloxiertes Aluminium vorliegt. Die Oberfläche weist also eine Eloxalschicht auf. Eine derartige Eloxalschicht verbessert erheblich einen thermischen Emissionswert gegenüber einer nicht eloxierten Schicht. Es ergeben sich damit thermisch günstige Verhältnisse, weil die Oberfläche in besonders gutem Maße Wärme abstrahlen kann.

Die elektrische Leiteranordnung 3 weist eine Länge von mindestens 1,5 m auf. Bevorzugt ist sogar eine noch größere Länge. Bei einer derartigen Länge kann man einen Verfahrweg der Magnetfelderzeugungseinrichtung 2 gegenüber der elektrischen Leiteranordnung 3 von 0,7 m aus einer mittleren Position in beide Richtungen zulassen, so dass auch ein Pendel eine entsprechend große Schwingung durchführen kann. Dies ist besonders für hohe und schlanke Bauwerke mit einer Höhe von über 100 m günstig. Die genaue Länge richtet sich natürlich nach dem Verwendungszweck.

Mit der dargestellten Ausgestaltung bildet die elektrische Leiteranordnung 3 ein Strukturbauteil mit einer erhöhten Steifigkeit und Festigkeit, das zur Übertragung der Dämpferkräfte geeignet ist. Die elektrische Leiteranordnung 3 bildet gleichzeitig die elektrische Leiteranordnung, in der die Wirbelströme induziert werden, wenn sich die Magnetfelderzeugungseinrichtung 2 gegenüber der elektrischen Leiteranordnung 3 bewegt. Die Magnetfelderzeugungseinrichtung 2 wird auf der elektrischen Leiteranordnung 3 geführt, so dass keine separaten Führungsbahnen notwendig sind. Aufgrund der Eloxalschicht an der großflächigen Oberfläche ist die elektrische Leiteranordnung 3 in der Lage, auch größere Wärmemengen an die Umgebung abzugeben. Ggfs. kann man vorsehen, die Oberfläche der elektrischen Leiteranordnung 3 durch weitere Maßnahmen zu vergrößern, z.B. durch Einbringen von Kühlrippen oder die Verwendung von zusätzlichen Kühlkörpern.

Die Magnetfelderzeugungseinrichtung 2 kann schließlich beispielsweise mit einer Masse eines Pendels verbunden sein oder die Masse des Pendels bilden. Die Magnetfelderzeugungseinrichtung 2 kann auch auf andere Weise ein schwingendes Element bilden, das zur Schwingungstilgung in einer schwingenden Struktur, beispielsweise einem Turm einer Windenergieanlage, aufgehängt oder auf andere Weise mit einer schwingenden Struktur, deren Schwingung zu tilgen ist, verbunden ist.

## Patentansprüche

1. Schwingungsdämpferanordnung (1) mit einer Dämpfungseinrichtung, die eine Magnetfelderzeugungseinrichtung (2) und eine elektrische Leiteranordnung (3) aufweist, die relativ zueinander bewegbar sind, wobei die Magnetfelderzeugungseinrichtung (2) an der elektrischen Leiteranordnung (3) geführt ist, wobei die Schwingungsdämpferanordnung (1) mindestens eine erste steuerbare Brems-/Blockiereinrichtung (4) aufweist, die die Bewegung der Magnetfelderzeugungseinrichtung (2) gegenüber der elektrischen Leiteranordnung (3) bremsen kann, bis diese relativ zueinander stillstehen, und die insbesondere mit der elektrischen Leiteranordnung (3) zusammenwirkt, wobei die erste steuerbare Brems-/Blockiereinrichtung (4) mindestens ein erstes Betätigungselement (6) aufweist, das mittels mindestens eines ersten Hebelarms (11) mit mindestens einem ersten Bremselement (9) zusammenwirkt, und die elektrische Leiteranordnung (3) als eine Schiene mit einer Längserstreckung ausgebildet ist, **dadurch gekennzeichnet, dass** das erste Bremselement (9) mittels des ersten Hebelarms (11) in eine Anlage mit der Schiene bringbar ist.

2. Schwingungsdämpferanordnung nach Anspruch 1, **dadurch gekennzeichnet, dass** die Schwingungsdämpferanordnung (1) mindestens eine zweite steuerbare Brems-/Blockiereinrichtung (5) aufweist, die auf einer der ersten steuerbaren Brems-/Blockiereinrichtung (4) gegenüberliegenden Seite der elektrischen Leiteranordnung (3) angeordnet ist.

3. Schwingungsdämpferanordnung nach Anspruch 1 oder 2, **dadurch gekennzeichnet, dass** die erste steuerbare Brems-/Blockiereinrichtung (4) und/oder die zweite steuerbare Brems-/Blockiereinrichtung (5) mindestens ein zweites Bremselement (10) aufweist, das auf einer dem ersten Bremselement (9) transversal zur Längserstreckung gegenüberliegenden Seite der Schiene mit dieser in Anlage bringbar ist.

4. Schwingungsdämpferanordnung nach Anspruch 3, **dadurch gekennzeichnet, dass** die Schiene mindestens einen transversal zur Längserstreckung verlaufenden ersten Flansch (36) aufweist, mit dem das erste Bremselement (9) und/oder das zweite Bremselement (10) in Anlage bringbar ist.

5. Schwingungsdämpferanordnung nach einem der Ansprüche 1 bis 4, **dadurch gekennzeichnet, dass** die Schiene mindestens zwei paarweise transversal zur Längserstreckung verlaufende Flansche (36, 37; 36a, 37a) aufweist, zwischen denen das erste Bremselement (9) und/oder das zweite Bremselement (10) angeordnet ist.

6. Schwingungsdämpferanordnung nach einem der Ansprüche 1 bis 5, **dadurch gekennzeichnet, dass** das erste Betätigungselement (6) mittels eines ersten Zugelements (17) betätigbar ist und wobei mindestens der erste Hebelarm (11) mittels einer ersten Vorspannungseinrichtung (13) unter einer Vorspannung gehalten ist.

7. Schwingungsdämpferanordnung nach einem der Ansprüche 1 bis 6, **dadurch gekennzeichnet, dass** mindestens das erste Betätigungselement (6) mittels eines ersten Aktuators (15) gesteuert ist.

8. Schwingungsdämpferanordnung nach einem der Ansprüche 1 bis 7, **dadurch gekennzeichnet, dass** ein Abstandssensor vorgesehen ist, der einen Anstand zwischen der Magnetfelderzeugungseinrichtung (2) und der elektrischen Leiteranordnung (3) überwacht.

9. Schwingungsdämpferanordnung nach einem der Ansprüche 1 bis 8, **dadurch gekennzeichnet, dass** die Magnetfelderzeugungseinrichtung (2) eine Rollenanordnung (30, 31, 32, 33, 34, 35) mit mehreren Rollen aufweist, die an der elektrischen Leiteranordnung (3) anliegen.

10. Schwingungsdämpferanordnung nach Anspruch 9, **dadurch gekennzeichnet, dass** jeweils zwei Rollen paarweise an gegenüberliegenden Seiten der elektrischen Leiteranordnung (3) anliegen.

11. Schwingungsdämpferanordnung nach Anspruch 9 oder 10, **dadurch gekennzeichnet, dass** mindestens eine Rolle unter einer Vorspannung an der elektrischen Leiteranordnung (3) anliegt.

12. Schwingungsdämpferanordnung nach einem der Ansprüche 1 bis 9, **dadurch gekennzeichnet, dass** die Magnetfelderzeugungseinrichtung (2) mindestens zwei in Längserstreckung der Schiene nebeneinander mit einem vorbestimmten Abstand angeordnete Magnete und auf der von der Schiene abgewandten Seite der Magnete eine magnetisierbare Rückschlussplatte aufweist.

13. Schwingungsdämpferanordnung nach einem der Ansprüche 9, 10, 11 oder 12 in Kombination mit Anspruch 9, **dadurch gekennzeichnet, dass** mindestens eine Rolle einen Verschleißsensor aufweist.

## Claims

1. Vibration absorbing system (1) with a damping device which has a magnetic field generating device (2) and an electrical conductor arrangement (3) which can be moved relative to one another, the magnetic field generating device (2) being guided on the electrical conductor arrangement (3), the vibration absorbing system arrangement (1) having at least a first controllable break/blocking device (4) which can break the movement of the magnetic field generating device (2) with respect to the electrical conductor arrangement (3) until the latter are stationary relative to one another, and which interacts in particular with the electrical conductor arrangement (3), the first controllable break/blocking device (4) having at least a first actuating element (6) which interacts with at least a first break element (9) by means of at least a first lever arm (11), and the electrical conductor arrangement (3) being designed as a rail with a longitudinal extent, **characterized in that** the first break element (9) can be brought into contact with the rail by means of the first lever arm (11).

2. Vibration absorbing system according to claim 1, **characterized in that** the vibration absorbing system (1) comprises at least a second controllable break/blocking device (5) which is arranged on a side of the electrical conductor arrangement (3) opposite the first controllable break/blocking device (4).

3. Vibration absorbing system according to claim 1 or 2, **characterized in that** the first controllable break/blocking device (4) and/or the second controllable break/blocking device (5) comprises at least one second break element (10) which can be brought into contact with the rail on the side of the rail opposite the first break element (9) transversely to the longitudinal extension.

4. Vibration absorbing system according to claim 3, **characterized in that** the rail has at least one flange (36) extending transversely to the longitudinal extension with which the first breaking element (9) and/or the second breaking element (10) can be brought into contact.

5. Vibration absorbing system according to any of claims 1 to 4, **characterized in that** the rail has at least two flanges (36, 37; 36a, 37a) extending in pairs transversely to the longitudinal extension, between which the first break element (9) and/or the second break element (10) is arranged.

6. Vibration absorbing system according to any of claims 1 to 5, **characterized in that** the first actuating element (6) can be actuated by means of a first tension element (17) and wherein at least the first lever arm (11) is held under a pretension by means of a first pretensioning device (13).

7. Vibration absorbing system according to any of claims 1 to 6, **characterized in that** at least the first actuating element (6) is controlled by means of a first actuator (15).

8. Vibration absorbing system according to any of claims 1 to 7, **characterized in that** a distance sensor is provided which monitors a distance between the magnetic field generating device (2) and the electrical conductor arrangement (3).

9. Vibration absorbing system according to any of claims 1 to 8, **characterized in that** the magnetic field generating device (2) comprises a roller arrangement (30, 31, 32, 33, 34, 35) with a plurality of rollers which abut on the electrical conductor arrangement (3).

10. Vibration absorbing system according to claim 9, **characterized in that** two rollers, each lie in pairs on opposite sides of the electrical conductor arrangement (3).

11. Vibration absorbing system according to claim 9 or 10, **characterized in that** at least one roller bears against the electrical conductor arrangement (3) under a pretension.

12. Vibration absorbing system according to any of claims 1 to 9, **characterized in that** the magnetic field generating device (2) comprises at least two magnets arranged side by side in the longitudinal extension of the rail at a predetermined distance and a magnetizable return plate on the side of the magnets facing away from the rail.

13. Vibration absorbing system according to any of claims 9, 10, 11 or 12 in combination with claim 9, **characterized in that** at least one roller comprises a wear sensor.

## Revendications

1. Système d'amortissement de vibrations (1) avec un dispositif d'amortissement, qui comporte un dispositif de production de champ magnétique (2) et un système de guidage électrique (3), qui sont mobiles l'un par rapport à l'autre, sachant que le dispositif de production de champ magnétique (2) est guidé sur le système de guidage électrique (3), sachant que le système d'amortissement de vibrations (1) comporte au moins un premier dispositif de freinage/blocage pouvant être commandé (4), qui peut freiner le mouvement du système de production de champ magnétique (2) par rapport au système de guidage électrique (3) jusqu'à ce que ceux-ci s'arrêtent l'un par rapport à l'autre et qui agit conjointement en particulier avec le système de guidage électrique (3), sachant que le premier dispositif de freinage/blocage pouvant être commandé (4) comporte au moins un premier élément d'actionnement (6), qui agit conjointement au moyen d'au moins un premier bras de levier (11) avec au moins un premier élément de freinage (9) et le système de guidage électrique (3) est conçu comme un rail avec une extension longitudinale, **caractérisé en ce que** le premier élément de freinage (9) peut être mis en application avec le rail au moyen du premier bras de levier (11).

2. Système d'amortissement de vibrations selon la revendication 1, **caractérisé en ce que** le système d'amortissement de vibrations (1) comporte au moins un deuxième dispositif de freinage/blocage pouvant être commandé (5), qui est disposé sur un côté du système de guidage électrique (3), opposé au premier dispositif de freinage/blocage pouvant être commandé (4).

3. Système d'amortissement de vibrations selon la revendication 1 ou 2, **caractérisé en ce que** le premier dispositif de freinage/blocage pouvant être commandé (4) et/ou le deuxième dispositif de freinage/blocage pouvant être commandé (5) comporte au moins un deuxième élément de freinage (10), qui peut être mis en appui avec celui-ci sur un côté du rail opposé au premier élément de freinage (9) transversalement à l'extension longitudinale.

4. Système d'amortissement de vibrations selon la revendication 3, **caractérisé en ce que** le rail comporte au moins une première bride (36) passant transversalement à l'extension longitudinale avec laquelle le premier élément de freinage (9) et/ou le deuxième élément de freinage (10) peut être mis en application.

5. Système d'amortissement de vibrations selon l'une quelconque des revendications 1 à 4, **caractérisé en ce que** le rail comporte au moins deux brides (36, 37 ; 36a, 37a) passant par paire transversalement à l'extension longitudinale entre lesquelles est disposé le premier élément de freinage (9) et/ou le deuxième élément de freinage (10).

6. Système d'amortissement de vibrations selon l'une quelconque des revendications 1 à 5, **caractérisé en ce que** le premier élément d'actionnement (6) peut être actionné au moyen d'un premier élément de traction (17) et sachant qu'au moins le premier bras de levier (11) est maintenu sous une précontrainte au moyen d'un premier dispositif de précontrainte (13).

7. Système d'amortissement de vibrations selon l'une quelconque des revendications 1 à 6, **caractérisé en ce qu'**au moins le premier élément d'actionnement (6) est commandé au moyen d'un premier actionneur (15).

8. Système d'amortissement de vibrations selon l'une quelconque des revendications 1 à 7, **caractérisé en ce qu'**un capteur de distance est prévu qui surveille une distance entre le dispositif de production de champ magnétique (2) et le système de guidage électrique (3).

9. Système d'amortissement de vibrations selon l'une quelconque des revendications 1 à 8, **caractérisé en ce que** le dispositif de production de champ magnétique (2) comporte un système de galets (30, 31, 32, 33, 34, 35) avec plusieurs galets qui adhèrent au système de guidage électrique (3).

10. Système d'amortissement de vibrations selon la revendication 9, **caractérisé en ce que** deux galets adhèrent respectivement par paire sur les côtés opposés du système de guidage électrique (3).

11. Système d'amortissement de vibrations selon la revendication 9 ou 10, **caractérisé en ce qu'**au moins un galet adhère sous une précontrainte au système de guidage électrique (3).

12. Système d'amortissement de vibrations selon l'une quelconque des revendications 1 à 9, **caractérisé en ce que** le système de production de champ magnétique (2) comporte au moins deux aimants disposés dans l'extension longitudinale du rail l'un à côté de l'autre à une distance prédéfinie et une plaque de retour aimantable sur le côté des aimants opposé au rail.

13. Système d'amortissement de vibrations selon l'une quelconque des revendications 9, 10, 11 ou 12 en combinaison avec la revendication 9, **caractérisé en ce qu'**au moins un galet comporte un capteur d'usure.
